# DEMANDE DE BREVET EUROPEEN

(11) **EP 2 105 673 A1**
(43) Date de publication de la demande: **30.09.2009**
(21) Numéro de dépôt: 09360019.5
(22) Date de dépôt: 26.03.2009
(51) Int. Cl.: F24B 13/00, C03C 17/06, F23M 11/04

(54) **Vitre autonettoyante pour appareil de chauffage à combustion et à paroi vitrée**

(30) Priorité: 27.03.2008 FR 0801680
(71) Demandeur: Fondis, 68800 Thann (FR)
(72) Inventeur: Haas, Frédéric, 68460 Lutterbach (FR); Ozil, Fabien, 68290 Rimbach Pres Masevaux (FR)
(74) Mandataire: Metz, Paul

(57) **Abrégé**

La vitre autonettoyante (4) est destinée à un appareil de chauffage (1) à paroi vitrée (2), notamment une cheminée (3).

Elle est et reste optiquement transparente et comprend :
- une barrière thermique (7) qui réduit la quantité de chaleur traversant la vitre, de manière à élever la température de la face intérieure (5) de la vitre dirigée vers le foyer (6) lorsqu'une combustion se produit dans l'appareil de chauffage ; et
- un catalyseur d'oxydation (8), préférentiellement à base d'oxyde de cérium, qui abaisse la température d'inflammation des imbrûlés se déposant au niveau de la face intérieure de la vitre.

La barrière thermique, isolante et/ou réfléchissante, est préférentiellement située sur ou à proximité de la face extérieure (12) de la vitre et le catalyseur d'oxydation au niveau de sa face intérieure.

## Description

La présente invention concerne une vitre autonettoyante pour appareil de chauffage à combustion et à paroi vitrée, en particulier pour un foyer fermé de cheminée.

L'invention se rapporte plus précisément à une vitre pour un appareil de chauffage, comportant une barrière thermique limitant la fuite de la chaleur vers l'extérieur et un catalyseur d'oxydation activant et facilitant la calcination ou l'incinération des particules résultant de la combustion.

Pour les cheminées à foyer fermé, l'agrément est généralement aussi important que le chauffage, voire même plus. Cependant, la combustion du bois provoque inévitablement un dépôt de particules sur la face intérieure de la vitre : suie, bistre et autres imbrûlés notamment carbonés, ce qui a pour conséquence une opacification progressive de la vitre.

Ce dépôt opaque est particulièrement inesthétique. Il gêne la vision du foyer et, n'étant pas uniforme, apporte un caractère disgracieux aux flammes vues à travers la vitre. En outre, il empêche une bonne surveillance de la combustion se déroulant à l'intérieur du foyer.

Pour limiter ce dépôt d'imbrûlés particulièrement gênant, une solution classique consiste à diriger un courant d'air qui balaye la face intérieure de la vitre. Ce courant d'air permet d'atténuer la quantité de matières qui se dépose sur cette face de la vitre.

Cependant et même s'il le ralentit, ce balayage par flux d'air n'empêche pas l'obscurcissement progressif de la vitre. Des particules imbrûlées continuent tout de même à se déposer sur la vitre et le flux d'air de balayage n'est pas assez chaud pour provoquer leur décomposition thermique.

En utilisation, cette solution présente une efficacité limitée et le dépôt d'imbrûlés n'est que ralenti.

On connaît dans d'autres domaines d'application, par le brevet US 7.247.383, une vitre autonettoyante fonctionnant selon un principe différent de celui de l'invention, à savoir le principe de la thermophorèse dans le but d'empêcher la fixation des matières polluantes sur la face intérieure de la vitre. Pour cela, la vitre comporte un moyen actif de chauffage supplémentaire, par exemple sous forme d'électrodes, au niveau de la face intérieure de la vitre. Ces moyens de chauffage supplémentaires doivent être alimentés en énergie pendant toute la durée de la combustion, ce qui augmente le coût d'utilisation de l'appareil et le rend plus complexe.

On connaît également les solutions décrites dans les demandes de brevet EP 1.293.726 et US 2008/022992 qui ne sont pas non plus satisfaisantes car d'efficacité limitée.

Le dépôt opaque doit être régulièrement éliminé par l'utilisateur s'il veut conserver l'agrément de la vision des flammes et pouvoir surveiller l'évolution de la combustion.

Cette élimination se fait habituellement par un nettoyage long, difficile et fastidieux, car les particules forment en refroidissant un dépôt collant et une croûte dure, incrustée et compacte qui doit être cassée et grattée manuellement.

Ce nettoyage est d'autant plus pénible que, dans de nombreux modèles de cheminée, il est difficile d'accéder à la totalité de la face intérieure de la vitre.

En outre, ce nettoyage n'est possible que lorsque la vitre est froide. La cheminée doit donc nécessairement être arrêtée de façon prolongée, arrêt qui peut être gênant lorsque la cheminée remplit le rôle du chauffage principal pour l'habitation.

Le but de la présente invention est de proposer une vitre autonettoyante pour un foyer fermé de cheminée ou autre appareil de chauffage à paroi vitrée, dont la fonction d'autonettoyage est liée à la combustion et de ce fait se produit pendant le fonctionnement de l'appareil de chauffage.

Pour résoudre ce problème technique, le principe inventif consiste à utiliser l'effet combiné d'une barrière thermique, qui concentre sur la face intérieure de la vitre la chaleur produite par la combustion de manière à augmenter la température de cette face de la vitre, et d'un catalyseur d'oxydation, qui a pour but d'abaisser la température d'inflammation des particules imbrûlées qui se déposent de manière à provoquer leur élimination par dégradation thermique lors de l'utilisation de l'appareil de chauffage.

L'invention porte ainsi sur une vitre autonettoyante pour appareil de chauffage à combustion et à paroi vitrée, notamment pour une cheminée à foyer fermé, vitre comportant une face intérieure dirigée vers le foyer de l'appareil de chauffage et une face extérieure dirigée vers l'extérieur de l'appareil.

Selon l'invention, cette vitre comprend :
- une barrière thermique qui réduit la quantité de chaleur traversant la vitre vers l'extérieur, de manière à élever la température de la face intérieure de la vitre lorsqu'une combustion se produit dans le foyer de l'appareil de chauffage ; et
- un catalyseur d'oxydation qui abaisse la température d'inflammation des imbrûlés, notamment carbonés, se déposant sur la face intérieure de la vitre.

L'ensemble ainsi constitué est optiquement transparent. Avantageusement, il le reste grâce à l'invention.

L'effet combiné de la barrière thermique et du catalyseur d'oxydation permet de détruire les particules qui se déposent au niveau de la face intérieure de la vitre, uniquement au moyen de la chaleur dégagée par la combustion pendant le fonctionnement normal de l'appareil de chauffage.

Le catalyseur d'oxydation, présent ou déposé sur la face interne de la vitre, permet d'abaisser la température d'inflammation des dépôts opacifiants se formant lors de l'utilisation de la cheminée et ainsi d'activer leur élimination par effet thermique uniquement au moyen de la chaleur produite par la combustion se produisant dans le foyer.

La barrière thermique intégrée dans la vitre de la cheminée permet d'élever notablement la température de la surface de la vitre située du côté du foyer (face intérieure) pour que cette élimination soit complète.

Avantageusement, cette barrière thermique a également pour conséquence un abaissement de la température de la face externe de la vitre de la cheminée, ce qui se traduit par une plus grande sécurité pour l'utilisateur et sa famille.

La barrière thermique peut être une barrière isolante limitant la transmission de la chaleur à travers la vitre, par exemple réalisée sous la forme d'un double vitrage ou de plusieurs panneaux de verre séparés à chaque fois par une lame d'air immobile, et/ou une barrière réfléchissante qui réfléchit les rayonnements infrarouges vers la face intérieure de la vitre, formée par exemple à partir d'un oxyde d'étain.

Cette barrière thermique est préférentiellement située sur ou à proximité de la face extérieure de la vitre, mais peut également être placée dans son épaisseur. Il s'agit de préférence d'une couche, d'un dépôt ou d'un revêtement.

Selon un mode de réalisation préférentiel de l'invention, le catalyseur d'oxydation contient un ou plusieurs élément(s) choisi(s) parmi les terres rares et le huitième sous-groupe de la classification périodique, notamment le cérium, le platine, le palladium, le rhodium et l'Yttrium. Il contient de préférence un oxyde de cérium.

Ce catalyseur d'oxydation peut être réparti dans l'ensemble du vitrage, mais peut préférentiellement se trouver dans une couche, un revêtement ou un dépôt sur la face intérieure de la vitre.

Il peut également être appliqué par l'utilisateur sur la face intérieure de la vitre avant une combustion.

D'autres caractéristiques et avantages de l'invention apparaîtront à la lecture de la description détaillée qui va suivre, description faite en référence aux dessins annexés, dans lesquels :
- la figure 1 est une vue simplifiée en perspective d'une cheminée dont la porte vitrée en position fermée peut être ouverte par pivotement ;
- la figure 2 est une vue simplifiée en perspective de la cheminée de la figure 1 dont la porte vitrée est ouverte ;
- la figure 3 est une vue simplifiée en perspective d'une cheminée dont la porte vitrée en position fermée peut être ouverte par coulissement vertical ;
- la figure 4 est une vue simplifiée en perspective de la cheminée de la figure 3 dont la porte vitrée est ouverte ;
- la figure 5 est une vue schématique en coupe d'une cheminée dont la vitre est réalisée selon une première variante de l'invention ;
- la figure 6 est une vue schématique agrandie du détail encerclé sur la figure 5 ;
- la figure 7 est une vue schématique en coupe d'une cheminée dont la vitre est réalisée selon une deuxième variante de l'invention ;
- la figure 8 est une vue schématique agrandie du détail encerclé sur la figure 7 ;
- la figure 9 est une vue partielle schématique en coupe d'une vitre de cheminée selon une troisième variante de l'invention ;
- la figure 10 est une vue partielle schématique en coupe d'une vitre de cheminée selon une quatrième variante de l'invention ;
- la figure 11 est une vue partielle schématique en coupe d'une vitre de cheminée selon une cinquième variante de l'invention ;
- la figure 12 est une vue partielle schématique en coupe d'une vitre de cheminée selon une sixième variante de l'invention.

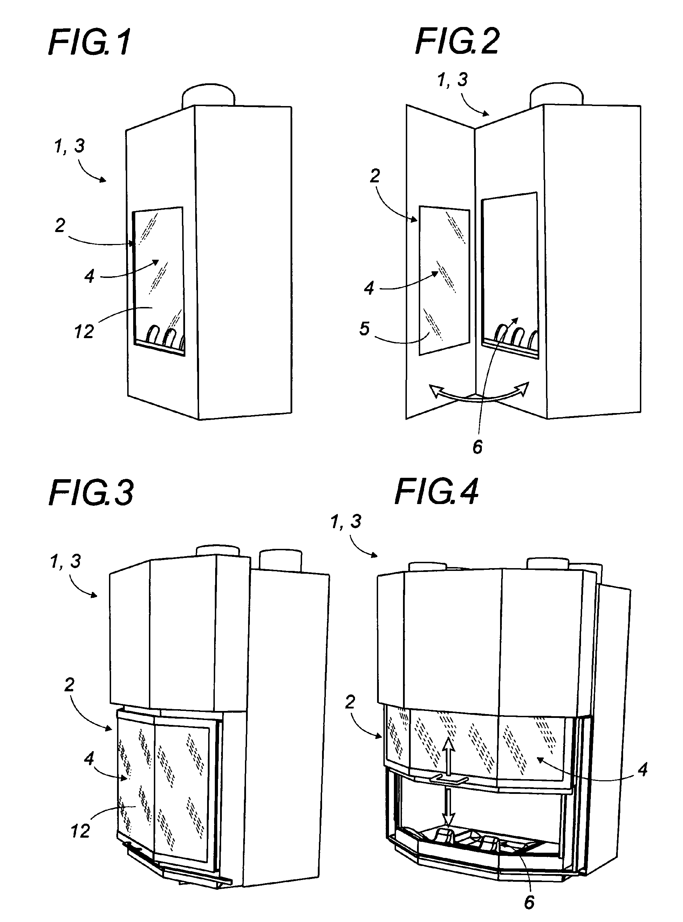

La vitre autonettoyante pour foyer fermé de cheminée selon la présente invention va maintenant être décrite de façon détaillée en référence aux figures 1 à 12. Les éléments équivalents représentés sur les différentes figures porteront les mêmes références numériques.

Dans la suite de cette description, on désignera par face intérieure et par face extérieure de la vitre, les faces de celle-ci situées respectivement du côté du foyer et du côté de l'habitation.

Sur les différentes figures, la vitre autonettoyante de l'invention a été représentée équipant un foyer fermé de cheminée. Ce foyer fermé de cheminée n'est donné qu'à titre d'exemple et ne doit pas être interprété de manière restrictive.

En effet, la vitre autonettoyante selon l'invention peut s'adapter à tout appareil de chauffage comportant une paroi vitrée, quels que soient sa nature, son modèle et le combustible utilisé. Il peut ainsi s'agir de tout appareil de chauffage à combustible solide, liquide ou gazeux : foyer fermé de cheminée, poêle de chauffage, chaudière ou autre. Par cheminée, nous entendrons donc également par la suite les dispositifs équivalents précités.

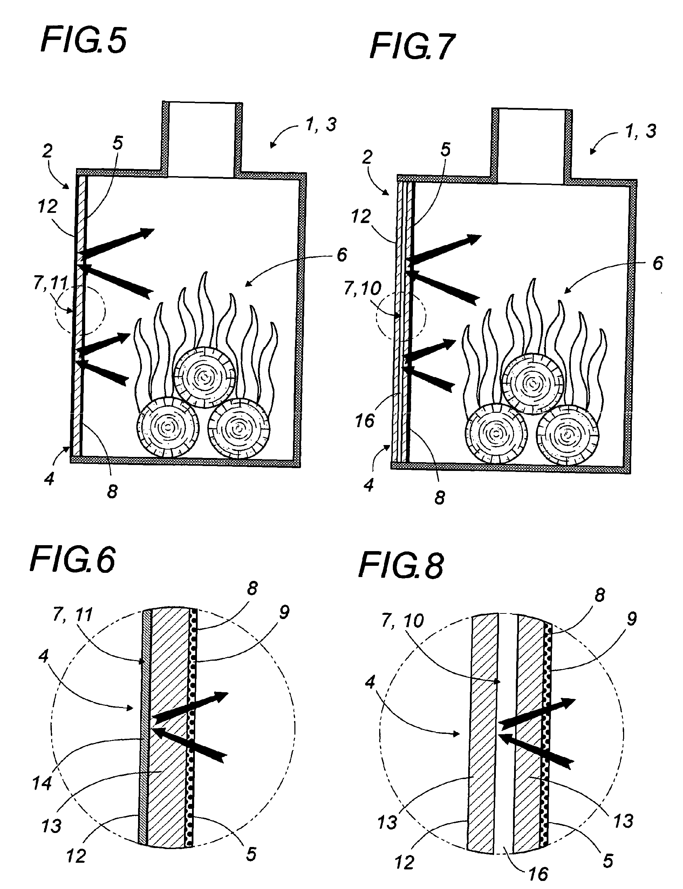

De même, sur les figures 5 et 7, nous avons représenté le combustible sous la forme de bûches de bois car il s'agit du combustible le plus fréquemment utilisé dans les foyers fermés de cheminée. Néanmoins, la vitre autonettoyante selon l'invention peut être utilisée quel que soit le combustible employé et se justifie dès lors que la combustion génère un dépôt opacifiant sur la face intérieure de la vitre.

Enfin, la paroi vitrée peut également être quelconque. Il peut s'agir par exemple d'une porte vitrée, d'une fenêtre, d'un hublot, d'un regard ou autre, pouvant s'ouvrir ou non.

Sur les figures 1 à 4, nous avons représenté deux exemples d'appareil de chauffage 1 équipé d'une paroi vitrée 2. Il s'agit de deux modèles couramment rencontrés de cheminée 3 à foyer fermé.

La paroi vitrée 2 de chacune de ces cheminées 3 est formée d'une vitre 4 dont la face intérieure 5 est susceptible d'être encrassée par les imbrûlés provenant de la combustion se déroulant dans le foyer 6 de la cheminée 3.

Or, selon les modèles de foyer fermé de cheminée, la face intérieure 5 de la vitre 4 n'est pas toujours facilement accessible (voir figures 3 et 4). L'utilisateur a donc beaucoup de mal à réaliser le nettoyage de celle-ci, ce qui se traduit avec un vitrage classique par un obscurcissement progressif de la paroi vitrée 2.

Un foyer fermé de cheminée 3 comportant une vitre autonettoyante 4 selon l'invention est représenté de manière schématique sur les figures 5 et 7.

Sur ces figures, la vitre 4 selon l'invention comporte une barrière thermique 7 qui limite la quantité de chaleur traversant la vitre 4 et un catalyseur d'oxydation 8 qui abaisse la température d'inflammation des imbrûlés se déposant sur la face intérieure 5 de la vitre.

Le catalyseur d'oxydation 8, symbolisé sur les figures 6 à 12 par des petits ronds noirs, est présent sur la face intérieure 5 de la vitre afin d'y activer la décomposition thermique des imbrûlés, notamment des imbrûlés carbonés provoquant une opacification de la vitre. Il permet ainsi la calcination ou l'incinération des particules imbrûlées résultant de la combustion.

Pour des raisons de clarté, un détail de la vitre 4 selon l'invention est représenté en coupe sur les figures 6 et 8, ces deux figures correspondant respectivement aux deux variantes de l'invention représentées sur les figures 5 et 7.

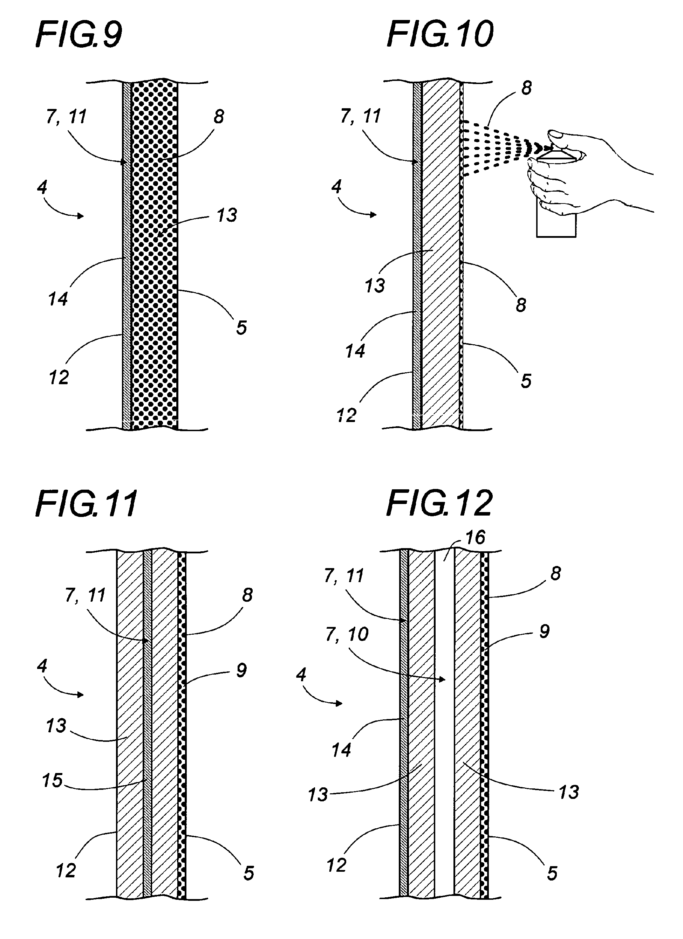

Les figures 9 à 12 illustrent schématiquement d'autres modes de réalisation de la vitre autonettoyante 4 selon l'invention.

Sur l'ensemble des figures annexées, les différentes épaisseurs sont données de manière purement illustrative et ne doivent pas être interprétées de manière restrictive.

Selon un mode de réalisation préféré de l'invention, la composition du catalyseur d'oxydation 8 contient un ou plusieurs éléments choisis dans le groupe constitué par les éléments du huitième sous-groupe du tableau périodique et les terres rares.

Ces composés peuvent par exemple se présenter sous forme élémentaire, complexée, d'alliages, de sels ou d'oxydes.

Préférentiellement, le catalyseur d'oxydation 8 contient un ou plusieurs éléments parmi l'oxyde de cérium, le palladium, le rhodium et le platine. Toute autre composition permettant d'activer la décomposition thermique des imbrûlés peut néanmoins être utilisée à titre de catalyseur d'oxydation.

Comme représenté sur les figures 5 à 8, le catalyseur d'oxydation se présente préférentiellement sous la forme d'une couche ou d'un revêtement 9 déposé à la fabrication sur la face intérieure 5 de la vitre 4.

Le catalyseur d'oxydation peut également être incorporé dans la masse de la vitre et par exemple dans toute son épaisseur, comme représenté sur la figure 9.

Dans tous ces cas, le catalyseur d'oxydation est incorporé à la vitre à la fabrication et y demeure de manière permanente. Il est ainsi actif à chaque combustion se déroulant dans le foyer 6 et permet d'éliminer les dépôts au fur et à mesure de leur formation.

On peut également envisager que le catalyseur d'oxydation 8 soit appliqué sur la face intérieure 5 de la vitre 4, par exemple par l'utilisateur de l'appareil de chauffage 1, juste avant une combustion.

Le catalyseur d'oxydation se présente alors sous la forme d'un liquide, d'une crème, d'une mousse, d'un gel, d'un aérosol, d'une solution, d'une suspension, d'une émulsion, d'une pâte, d'une cire, d'une poudre, d'un solide à étaler ou autre, que l'on applique sur la vitre directement ou au moyen d'un applicateur adapté, par exemple au moyen d'un pulvérisateur, d'un flacon ou d'une bombe aérosol, d'une éponge, d'un chiffon, d'un pinceau ou de tout autre moyen imaginable.

Le catalyseur, déposé à la surface de la vitre, préférentiellement sous la forme d'une couche mince, peut être appliqué de manière régulière et préventive, par exemple avant chaque combustion.

Il peut également être appliqué ponctuellement dans le cadre d'une opération de nettoyage lorsqu'un dépôt de matières imbrûlées recouvre la face intérieure 5 de la vitre 4. Dans ce cas, le catalyseur d'oxydation est déposé directement sur le dépôt à éliminer. L'appareil de chauffage est ensuite mis en route afin que la chaleur de la combustion provoque l'élimination du dépôt indésirable et régénère la vitre 4.

La dégradation thermique des dépôts de matières carbonées, telles que la suie ou analogue, que l'on retrouve classiquement sur la vitre des appareils de chauffage nécessite normalement (c'est-à-dire sans catalyseur) de très hautes températures, de l'ordre de 600°C à 700°C, qui ne sont jamais atteintes au niveau de la vitre dans les conditions normales de fonctionnement de ces appareils de chauffage.

L'utilisation du catalyseur d'oxydation 8, permet d'abaisser fortement la température d'inflammation de ces particules carbonées jusqu'à des températures de l'ordre de 300°C à 450°C, et même jusqu'à 300°C à 350°C avec un catalyseur à base d'oxyde de cérium.

Pour assurer qu'une telle température soit atteinte au niveau de la face intérieure 5 de la vitre 4 dans les conditions normales de fonctionnement de l'appareil de chauffage 1, la vitre 4 comporte en outre une barrière thermique 7 qui réduit la déperdition de chaleur à travers la vitre 4 de manière à concentrer la chaleur issue de la combustion sur la face intérieure 5 de la vitre 4 qui porte le catalyseur d'oxydation 8.

Cette barrière thermique 7 peut être une barrière isolante 10 qui réduit la quantité de chaleur sortante ou une barrière réfléchissante 11 qui réfléchit les rayonnements infrarouges vers l'intérieur de l'appareil de chauffage et en particulier vers la face intérieure 5 de la vitre 4. Bien entendu, ces deux fonctions peuvent être remplies par une même barrière thermique 7.

Ainsi, une partie de la chaleur (symbolisée par les flèches noires sur les figures) qui s'échapperait à travers la vitre 4 est conservée et/ou renvoyée par cette barrière thermique 7 vers la face intérieure 5 de la vitre 4 ce qui accroît la température à ce niveau et ainsi augmente l'efficacité du catalyseur d'oxydation.

L'élimination thermique du dépôt d'imbrûlés peut ainsi être réalisée aux conditions normales de fonctionnement de l'appareil de chauffage 1, sans qu'il soit nécessaire de forcer l'allure de chauffe.

La barrière thermique 7 se situe préférentiellement au niveau ou à proximité de la face extérieure 12 de la vitre 4. Elle peut également être intégrée dans l'épaisseur de la vitre, par exemple à la manière d'un feuilletage, ou être placée entre deux panneaux de verre 13.

Plusieurs exemples de barrière thermique ont été représentés sur les figures 5 à 12.

Sur les figures 5, 6, 9 et 10, la barrière thermique 7 est une barrière réfléchissante 11 aux infrarouges réalisée à partir d'une matière sensiblement réfléchissante vis-à-vis du rayonnement infrarouge sous la forme d'un revêtement 14 présent sur la face extérieure 12 de la vitre 4.

Sur la figure 11, cette barrière réfléchissante 11 se présente sous la forme d'une couche 15 intégrée dans l'épaisseur de la vitre 4.

Selon d'autres variantes non représentées de l'invention, cette barrière thermique réfléchissante peut également être recouverte d'une autre vitre externe, par exemple dans un but de protection de celle-ci. Elle peut aussi être doublée.

De même, au lieu d'une seule couche réfléchissante déposée par exemple sur la face extérieure de la vitre, on peut envisager d'en déposer plusieurs ou d'incorporer une matière réfléchissante dans la masse de la vitre.

Selon un mode de réalisation préférentiel de l'invention, la barrière thermique réfléchissante 11 est formée d'au moins un dépôt, un revêtement ou une couche semi-réfléchissante d'oxyde d'étain.

Un exemple de barrière thermique isolante 10 a été représenté sur les figures 7 et 8. Elle se présente sous la forme d'au moins un double vitrage. En effet, un tel double vitrage crée une isolation thermique par la lame d'air 16 immobile occupant l'intervalle entre les deux panneaux de verre 13.

Dans le cas où l'on souhaite encore renforcer l'efficacité de la barrière thermique, il est également possible de combiner un ou plusieurs doubles vitrages avec un ou plusieurs revêtement(s) 14 de matière réfléchissante, comme représenté sur la figure 12, ce ou ces revêtements pouvant être effectués sur l'une quelconque des faces du double vitrage hormis la face située du côté du foyer 6.

De même, il est parfaitement possible de combiner un ou plusieurs doubles vitrages avec une incorporation de matière réfléchissante dans la masse de l'un ou des panneaux de verre 13 ou sous la forme d'une ou plusieurs couches de matière internes à l'un des panneaux de verre 13.

En fonction de la nature de la barrière thermique 7 choisie pour la vitre autonettoyante 4 selon l'invention, l'homme du métier pourra donner à cette barrière un degré d'efficacité optimisé pour l'élimination des imbrûlés. A ce titre, il est important de remarquer que l'efficacité de la barrière thermique doit être suffisante pour activer l'élimination des imbrûlés par la couche de catalyseur, mais que si elle est trop élevée elle diminue le rayonnement de chaleur à travers la vitre d'exposition et donc la sensation directe de chaleur devant la vitre.

La barrière thermique 7, ainsi que le catalyseur d'oxydation 8 doivent évidemment être prévus, tant par leur composition, leur mode de dépôt et leur épaisseur, pour que la vitre autonettoyante 4 reste sensiblement transparente optiquement de façon à permettre la vision du foyer.

Avantageusement, l'homme du métier pourra remarquer que cette invention s'applique à tous les foyers fermés de cheminée à vitre et est pleinement compatible avec les cheminées présentant un courant d'air qui balaye la face intérieure de la vitre d'exposition.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention.

## Revendications

1. Vitre autonettoyante (4) pour appareil de chauffage (1) à combustion et à paroi vitrée (2), notamment pour une cheminée (3) à foyer fermé, vitre (4) comportant une face intérieure (5) dirigée vers le foyer (6) de l'appareil de chauffage et une face extérieure (12) dirigée vers l'extérieur de l'appareil, **caractérisée en ce qu'**elle comprend :
- une barrière thermique (7) qui réduit la quantité de chaleur traversant la vitre (4) vers l'extérieur, de manière à élever la température de la face intérieure (5) de la vitre lorsqu'une combustion se produit dans le foyer (6) de l'appareil de chauffage (1) ; et
- un catalyseur d'oxydation (8) qui abaisse la température d'inflammation des imbrûlés se déposant sur la face intérieure (5) de la vitre ;
l'ensemble étant optiquement transparent ;
et **en ce que** l'effet combiné de la barrière thermique et du catalyseur d'oxydation permet de détruire les particules qui se déposent au niveau de la face intérieure de la vitre, uniquement au moyen de la chaleur dégagée par la combustion pendant le fonctionnement normal de l'appareil de chauffage.

2. Vitre autonettoyante (4) selon la revendication précédente, **caractérisée en ce que** la barrière thermique (7) est une barrière isolante (10) qui limite la transmission de la chaleur à travers la vitre (4).

3. Vitre autonettoyante (4) selon la revendication précédente, **caractérisée en ce que** la barrière thermique isolante (10) est réalisée sous la forme d'un double vitrage ou de plusieurs panneaux de verre (13) séparés à chaque fois par une lame d'air (16) immobile.

4. Vitre autonettoyante (4) selon la revendication 1, **caractérisée en ce que** la barrière thermique (7) est une barrière réfléchissante (11) qui réfléchit les rayonnements infrarouges vers la face intérieure (5) de la vitre (4).

5. Vitre autonettoyante (4) selon la revendication précédente, **caractérisée en ce que** la barrière thermique réfléchissante (11) contient un oxyde d'étain.

6. Vitre autonettoyante (4) selon l'une quelconque des revendications précédentes, **caractérisée en ce que** la barrière thermique (7) est réalisée sous la forme d'une couche (15), d'un dépôt ou d'un revêtement (14), situé au niveau de la face extérieure (12) ou dans l'épaisseur de la vitre (4).

7. Vitre autonettoyante (4) selon l'une quelconque des revendications précédentes, **caractérisée en ce que** la barrière thermique (7) est située sur ou à proximité de la face extérieure (12) de la vitre (4).

8. Vitre autonettoyante (4) selon l'une quelconque des revendications précédentes, **caractérisée en ce que** le catalyseur d'oxydation (8) contient au moins un élément choisi parmi les terres rares et le huitième sous-groupe de la classification périodique.

9. Vitre autonettoyante (4) selon la revendication précédente, **caractérisée en ce que** le catalyseur d'oxydation (8) contient au moins un élément choisi parmi le cérium, le platine, le palladium, le rhodium et l'Yttrium.

10. Vitre autonettoyante (4) selon la revendication précédente, **caractérisée en ce que** le catalyseur d'oxydation (8) contient un oxyde de cérium.

11. Vitre autonettoyante (4) selon l'une quelconque des revendications précédentes, **caractérisée en ce que** le catalyseur d'oxydation (8) est présent dans une couche, un revêtement (9) ou un dépôt se trouvant au niveau de la face intérieure (5) de la vitre (4).

12. Vitre autonettoyante (4) selon l'une quelconque des revendications 1 à 10, **caractérisée en ce que** le catalyseur d'oxydation (8) est réparti dans l'ensemble du vitrage (4).

13. Vitre autonettoyante (4) selon l'une quelconque des revendications 1 à 10, **caractérisée en ce que** le catalyseur d'oxydation (8) est appliqué sur la face intérieure (5) de la vitre avant une combustion.
